# EUROPÄISCHE PATENTANMELDUNG

(11) **EP 3 461 619 A1**
(43) Veröffentlichungstag der Anmeldung: **03.04.2019**
(21) Anmeldenummer: 18206981.5
(22) Anmeldetag: 28.04.2015
(51) Int. Cl.: B29C 65/22, G01K 15/00, G01L 25/00, B29C 65/00, G01K 1/14

(54) **KALIBRATIONSSET FÜR EINE SCHWEISSVORRICHTUNG, INSBESONDERE EIN FOLIENSCHWEISS- UND/ODER HEISSSIEGELGERÄT, UND KALIBRIERVERFAHREN FÜR EINE SCHWEISSVORRICHTUNG**

(30) Priorität: 07.05.2014 DE 102014006566
(62) Teilanmeldung aus: 15165307.8
(71) Anmelder: Rische + Herfurth GmbH, 22041 Hamburg (DE)
(72) Erfinder: Nitsch, Ralf, 22926 Ahrensburg (DE); Schewe, Dirk, 25469 Halstenbek (DE)
(74) Vertreter: RGTH

(57) **Zusammenfassung**

Um ein Kalibrationsset sowie ein Kalibrierverfahren für eine Schweißvorrichtung, insbesondere ein Folienschweiß- und/oder Heißsiegelgerät bereitzustellen, welche es dem Anwender der Schweißvorrichtung ermöglichen, eine Kalibrierung der Schweißtemperatur des Heizelementes oder der Heizelemente an oder in dem Heizbandträger oder den Heizbandträgern und des Anpressdruckes der Anpressbacke der Schweißvorrichtung einfach und kostengünstig vor Ort vorzunehmen wird ein Kalibrationsset (100) für eine Schweißvorrichtung (10), insbesondere ein Folienschweiß- und/oder Heißsiegelgerät, wobei die Schweißvorrichtung (10) einen unbeweglichen Heizbandträger (13) mit oder ohne Heizelement und einen beweglichen Heizbandträger mit oder ohne Heizelement, insbesondere eine Anpressbacke (14), aufweist, geeignet zur Durchführung eines Kalibrierverfahrens zur Kalibration der Schweißtemperatur (T) des Heizbandträgers (13) und/oder der Schweißtemperatur (T) eines oder mehrerer Heizelemente an oder in dem Heizbandträger (13) oder den Heizbandträgern (13, 14) und/oder des Anpressdruckes (p) des beweglichen Heizbandträgers, insbesondere der Anpressbacke (14), vorgeschlagen, wobei das Kalibrationsset einen Temperaturfühler (11) sowie eine mit dem Temperaturfühler (11) verbindbare elektronische Auswerteeinheit (12) umfasst, und/oder dass das Kalibrationsset mindestens einen mit einem Anpressdrucksensor (26) der Schweißvorrichtung (10) verbindbaren Gewichtträger (34) umfasst.

## Beschreibung

Die Erfindung betrifft ein Kalibrationsset für eine Schweißvorrichtung, insbesondere ein Folienschweiß- und/oder Heißsiegelgerät, wobei die Schweißvorrichtung einen unbeweglichen Heizbandträger und einen beweglichen Heizbandträger als sogenannte Anpressbacke (im Folgenden nur Anpressbacke genannt) aufweist, geeignet zur Durchführung eines Kalibrierverfahrens zur Kalibration der Schweißtemperatur des/der Heizelemente an oder in dem/den Heizbandträger(n) und/oder des Anpressdruckes der beweglichen Anpressbacke sowie ein Kalibrierverfahren für eine Schweißvorrichtung, insbesondere ein Folienschweiß- und/oder Heißsiegelgerät, wobei die Schweißvorrichtung einen unbeweglichen Heizbandträger und eine bewegliche Anpressbacke aufweist, zur Kalibration der Schweißtemperatur des/der Heizelemente an oder in dem/den Heizbandträger(n) und/oder des Anpressdruckes der beweglichen Anpressbacke.

Folienschweißvorrichtungen werden zum Verschweißen von Folien in zum Beispiel Schlauch- und/oder Beutelform verwendet. Es können jedoch auch andere verschweißbare Materialien, wie beispielsweise innenbeschichtete Alu- und/oder Papierverbundfolien in Schlauch- und/oder Beutelform verschweißt werden. Eine Schweißvorrichtung umfasst in der Regel einen Heizbandträger mit einem Heizelement sowie einen weiteren beweglichen Heizbandträger mit oder ohne Heizelement (im Folgenden nur Anpressbacke genannt), welche zum Verschweißen der Folie auf den beweglichen oder unbeweglichen Heizbandträger verfahren und an diesen angedrückt werden kann. Die zu verschweißenden Folien werden zwischen dem unbeweglichen Heizbandträger und der Anpressbacke angeordnet. Durch das Zusammenspiel von erhitzten Heizelementen des/der Heizbandträger(s) sowie dem Anpressdruck der sogenannten beweglichen Anpressbacke wird über einen vorbestimmten Zeitraum unter Druck Wärme in die Folie eingeleitet. Beim Erkalten der Folie kommt es wegen des weiterhin aufrecht erhaltenen Anpressdrucks zum Verschweißen der Folie. Derartige Schweißvorrichtungen sind beispielsweise aus der EP 2497621 A2 der Anmelderin bekannt.

Für Schweißvorrichtungen, insbesondere Folienschweiß- und/oder Heißsiegelgeräte ergibt sich beispielsweise aus der Norm DIN EN ISO 11607-2, dass schriftliche Pläne für die Wartung, Reinigung und Kalibrierung vorzuliegen haben. Die Zeiträume für die regelmäßige Wartung, Reinigung und Kalibrierung bleibt dabei dem Anwender vorbehalten. Beispielsweise können Reinigungsintervalle von drei Monaten sowie Wartungs- und Kalibrierungsintervalle von zwölf Monaten vorgesehen sein.

Die Schweißzeit, die Schweißtemperatur, der Anpressdruck und gegebenenfalls die Durchlaufgeschwindigkeit von Folienbahnen und/oder -beuteln bei einer Endlosschweißvorrichtung (dauerbeheiztes Durchlaufschweiß- oder Heißsiegelgerät) sollen in der Regel durch den Kunden oder Anwender einstellbar sein. Zwar ist bei bekannten Schweißvorrichtungen auch der Anpressdruck p und die Schweißtemperatur T des/der Heizelemente an oder in dem/den Heizbandträger(n) vorgebbar, jedoch sind qualitativ hochwertige Schweißverbindungen empfindlich von Schwankungen im Anpressdruck und/oder der Schweißtemperatur abhängig, sodass eine Kalibration dieser Parameter besondere Bedeutung zukommt. So haben verschiedene neuere Verbundfolien, wie Folien aus einer Kombination aus Papier und Kunststoff oder Aluminium und Kunststoff, unterschiedliche Materialeigenschaften, welche für einen Schweißvorgang präzise Schweißtemperatur- und Anpressdruckbereiche voraussetzen. Bei Vliesstoffen aus Polyethylen, beispielsweise dem Stoff Tyvek®, ergibt sich eine durchsichtige Schweißnaht, wenn die Schweißtemperatur zu hoch gewählt ist. Ist hingegen die Schweißtemperatur zu niedrig eingestellt, so ergibt sich eine Schweißnaht von äußerst niedriger Qualität.

Es besteht somit der Bedarf nach einem Kalibrationsset und einem Kalibrierverfahren, mit welchem die Schweißtemperatur des/der Heizelemente an oder in dem/den Heizbandträger(n) und der Anpressdruck der Anpressbacke kalibriert werden können, sodass die von Material zu Material unterschiedlichen, sehr engen Schweißtemperatur- und Anpressdruckgrenzen eingehalten werden können.

### Darstellung der Erfindung: Aufgabe, Lösung, Vorteile

Der Erfindung liegt die Aufgabe zugrunde, ein Kalibrationsset sowie ein Kalibrierverfahren für eine Schweißvorrichtung, insbesondere ein Folienschweiß- und/oder Heißsiegelgerät bereitzustellen, welche es dem Anwender der Schweißvorrichtung ermöglicht, eine Kalibrierung der Schweißtemperatur des/der Heizelemente an oder in dem/den Heizbandträger(n) und des Anpressdruckes der Anpressbacke einfach und kostengünstig vor Ort vorzunehmen.

Diese Aufgabe wird durch ein erfindungsgemäßes Kalibrationsset und ein erfindungsgemäßes Kalibrierverfahren gelöst.

Erfindungsgemäß wird ein Kalibrationsset für eine Schweißvorrichtung, insbesondere ein Folienschweiß- und/oder Heißsiegelgerät vorgeschlagen, wobei die Schweißvorrichtung einen unbeweglichen Heizbandträger mit oder ohne Heizelement und einen beweglichen Heizbandträger mit oder ohne Heizelement (im Folgenden Anpressbacke), insbesondere eine Anpressbacke, aufweist, geeignet zur Durchführung eines Kalibrierverfahrens zur Kalibration der Schweißtemperatur des Heizbandträgers und/oder der Schweißtemperatur eines oder mehrerer Heizelemente an oder in dem Heizbandträger oder den Heizbandträgern und/oder des Anpressdruckes des beweglichen Heizbandträgers, insbesondere der Anpressbacke, wobei vorgesehen ist, dass das Kalibrationsset einen Temperaturfühler sowie eine mit dem Temperaturfühler verbindbare elektronische Auswerteeinheit umfasst, und/oder dass das Kalibrationsset mindestens einen mit einem Anpressdrucksensor der Schweißvorrichtung verbindbaren Gewichtträger umfasst.

Vorteilhafterweise kann mittels des Temperaturfühlers die Schweißtemperatur des Heizbandträgers beziehungsweise die Schweißtemperatur des/der auf oder an dem/den Heizbandträger(n) angeordneten Heizelemente(s) gemessen werden. Hierfür wird bevorzugt der Temperaturfühler mit der elektronischen Auswerteeinheit verbunden, welche den Temperaturfühler ansteuert beziehungsweise Informationen oder Signale aus dem Temperaturfühler ausliest. Bevorzugt ist die Auswerteeinheit jedoch dazu ausgebildet elektrotechnische Größen, wie beispielsweise den elektrischen Widerstand des Temperaturfühlers, zu messen oder zu bestimmen. Auch kann die Auswerteeinheit dazu ausgebildet sein, Spannungen an den Temperaturfühler anzulegen beziehungsweise Ströme durch den Temperaturfühler zu leiten oder zu messen. Mittels des mit der elektronischen Auswerteeinheit verbundenen Temperaturfühlers kann die Schweißtemperatur des/der Heizelemente(s) und/oder des/der Heizbandträger(s) genau bestimmt werden, insbesondere wenn der Temperaturfühler an einer definierten Referenztemperatur kalibriert wurde. Es lässt sich somit eine einfache und präzise Temperaturmessung des/der Heizbandträger(s) und/oder des/der Heizelemente(s) an oder in dem/den Heizbandträger(n) durchführen, sodass es dem Anwender auf einfache und kostengünstige sowie wiederholbare Weise ermöglicht wird, die Schweißtemperatur des/der Heizbandträger(s) und/oder des/der Heizelemente(s) auf oder an dem/den Heizbandträger(n) auf den gewünschten Wert anzupassen und somit die Schweißtemperatur des/der Heizelemente(s) auf oder in dem/den Heizbandträger(n) zu kalibrieren.

Die Heizbandträger können jeweils beweglich oder unbeweglich ausgeführt sein. Bevorzugt ist ein unterer Heizbandträger als unbeweglicher Heizbandträger ausgeführt und ein oberer Heizbandträger ist als bewegliche Anpressbacke ausgeführt.

Weiter kann durch Belastung eines Anpressdrucksensors oder mehrerer Anpressdrucksensoren der Schweißvorrichtung mit einem bekannten Referenzgewicht eine Anpressdruckmessvorrichtung der Schweißvorrichtung, wobei die Anpressdruckmessvorrichtung den/die Anpressdrucksensor(en) umfasst, kalibriert werden. Hierzu umfasst das Kalibrationsset vorteilhafterweise einen oder mehrere Gewichtträger, welche(r) mit dem/den Anpressdrucksensor (en) der Schweißvorrichtung verbindbar ist/sind, sodass eine Kraftausübung oder Druckbelastung des/der Anpressdrucksensor(s)en durch ein auf dem/den Gewichtträger(n) angeordnetes Referenzgewicht ermöglicht wird. Dies gestattet eine einfache und kostengünstige Kalibration des Anpressdruckes der Schweißvorrichtung.

Vorteilhafte Ausgestaltungen der Erfindung sind in den Unteransprüchen gekennzeichnet.

In einer bevorzugten Ausgestaltung des Kalibrationssets ist vorgesehen, dass zwei Gewichtträger vorgesehen sind, dass die Gewichtträger in etwa pilzförmig, plattenförmig, ständerförmig oder tischförmig ausgebildet sind und ein längliches Tragelement sowie eine endseitig an dem Tragelement angeordnete Gewichtauflagefläche aufweisen.

Durch die pilz-, platten-, ständer- oder tischförmige Ausgestaltung des Gewichtträgers kann eine punktgenaue Belastung des/der Anpressdrucksensor(s)en der Schweißvorrichtung gewährleistet werden. Hierfür wird bevorzugt das längliche Tragelement mit einem ersten Ende mit dem Anpressdrucksensor verbunden beziehungsweise wird vertikal oberhalb des Anpressdrucksensors angeordnet. Auf der der ersten Endseite des Tragelementes gegenüberliegend angeordneten Endseite des Tragelements ist bevorzugt eine Gewichtauflagefläche angeordnet. Ist somit der Gewichtträger oder sind die Gewichtträger vertikal oberhalb des/der Anpressdrucksensor(s)en angeordnet, so kann ein Referenzgewicht auf die Gewichtauflagefläche abgestellt werden, wobei durch die insbesondere pilz-, platten-, ständer- oder tischförmige Ausgestaltung der Gewichtauflagefläche eine große Auflagefläche für das Referenzgewicht bereitgestellt wird, sodass das Referenzgewicht stabil und sicher auf der Gewichtauflagefläche abgesetzt werden kann. Die längliche Ausgestaltung des Tragelementes gestattet es vorteilhafterweise, dass der Gewichtträger oder die Gewichtträger raumsparend in den Innenraum der Schweißvorrichtung eingeführt werden können, sodass ohne Beschädigung weiterer Elektronikkomponenten, die Gewichtträger an dem/den Anpressdrucksensor(en) angeordnet werden können.

In einer weiter bevorzugten Ausführungsform des Kalibrationssets wird vorgeschlagen, dass die Gewichtauflagefläche magnetisch oder magnetisiert ist, und/oder dass an dem der Gewichtauflagefläche gegenüberliegenden Ende des Tragelementes ein Verbindungselement, insbesondere ein Gewindeabschnitt, angeordnet ist.

Die magnetische oder magnetisierte Gewichtauflagefläche des Gewichtträgers oder der Gewichtträger wird vorteilhafterweise bereitgestellt, um magnetisierte oder magnetische Referenzgewichte auf die Gewichtauflagefläche des Gewichtträgers abzustellen. Dabei bewirkt die zwischen der magnetischen oder magnetisierten Gewichtauflagefläche und dem magnetisierten oder magnetischen Referenzgewicht wirkende Magnetkraft, dass das Referenzgewicht sicher und auch bei Erschütterung gegen das Herunterfallen von der Gewichtauflagefläche gesichert auf der Gewichtauflagefläche positioniert werden kann. Das an dem der Gewichtauflagefläche gegenüberliegenden Ende des Tragelementes angeordnete Verbindungselement dient einer sicheren Verbindung des Gewichtträgers mit dem Anpressdrucksensor. Das der Gewichtauflagefläche gegenüberliegende Ende des Tragelementes entspricht der ersten Endseite des Tragelementes, mit welcher der Gewichtträger an dem Anpressdrucksensor anordbar ist. Die Anordnung des Gewichtträgers mittels eines Gewindeabschnittes an dem/den Anpressdrucksensor(en) stellt dabei eine besonders sichere Anordnung dar. Jedoch kann das Verbindungselement auch anders ausgestaltet sein, beispielsweise stiftförmig, kegelförmig oder pyramidenförmig.

Eine weitere bevorzugte Ausgestaltung des Kalibrationssets ist dadurch gekennzeichnet, dass der Temperaturfühler als eine Platine oder ein Thermometer ausgebildet ist und/oder dass der Temperaturfühler als ein Band ausgebildet ist und ein metallisches Material, insbesondere eine metallische Legierung, umfasst, dass die Länge des Bandes bevorzugt im Wesentlichen der Länge des unbeweglichen Heizbandträgers entspricht, und das besonders bevorzugt an den Enden des Bandes jeweils eine elektrische Leitung angeordnet ist, wobei die elektrischen Leitungen mit mindestens einem elektrischen Anschluss der Auswerteeinheit verbindbar sind.

Der Temperaturfühler kann ferner ein nichtmetallisches Material aufweisen. Durch die vorteilhafte Ausgestaltung des Temperaturfühlers als ein Band, wobei die Länge des Bandes bevorzugt im Wesentlichen der Länge des Heizbandträgers entspricht, wird es ermöglicht, dass der Temperaturfühler im Wesentlichen deckungsgleich auf der beheizten Fläche des Heizbandes oder des Heizbandträgers der Schweißvorrichtung angeordnet werden kann. Dies hat insbesondere den Vorteil, dass Positionierungsfehler des Temperaturfühlers auf dem Heizbandträger keine oder nur unwesentliche Einflüsse auf das Messergebnis der Betriebstemperatur des Heizbandes oder des Heizbandträgers haben. Ferner kann Material für den Temperaturfühler eingespart werden. Darüber hinaus kann der als Band ausgebildete Temperaturfühler auch eine Breite aufweisen, welche bevorzugt im Wesentlichen der Breite des Heizbandträgers entspricht. Ein weiterer Vorteil des bandförmigen Temperaturfühlers ergibt sich dadurch, dass im Wesentlichen die gesamte beheizte Fläche des Heizbandträgers oder Heizbandes beziehungsweise des Heizelementes im Hinblick auf die Temperatur des Heizbandes oder des Heizelementes gemessen werden kann. Dies hat den Vorteil, dass gegenüber einer Punktmessung das gesamte Heizband im Hinblick auf die Temperatur gemessen werden kann. Mittels der elektrischen Leitungen des Bandes ist dieses mit der Auswerteeinheit verbindbar, sodass die Auswerteeinheit die elektrotechnischen Kenngrößen des Bandes, wie beispielsweise den elektrischen Widerstand, die Spannung oder die Stromstärke messen oder anlegen kann. Hierfür weisen metallische Legierungen vorteilhafte Eigenschaften auf. Insbesondere weist eine metallische Legierung eine für das mit dem Kalibrationsset durchführbare Kalibrierverfahren vorteilhafte Temperaturabhängigkeit des elektrischen Widerstandes auf. Ist der Temperaturfühler als Platine oder Thermometer ausgebildet, so ist bevorzugt mindestens eine elektrische Leitung zur Verbindung des Temperaturfühlers mit der Auswerteeinheit vorgesehen. Der Temperaturfühler kann darüber hinaus in jeder geeigneten Form ausgebildet sein.

In einer zweckmäßigen Weiterbildung des Kalibrationssets ist vorgesehen, dass das Kalibrationsset eine, insbesondere kreuzförmige, Temperaturfühlerhaltevorrichtung umfasst, dass der Temperaturfühler auf und/oder in der Temperaturfühlerhaltevorrichtung, bevorzugt spiralförmig oder wellenförmig, anordbar ist, und dass die Temperaturfühlerhaltevorrichtung ein hitzebeständiges Material, insbesondere Makrolon oder ein Polykarbonat, umfasst.

Die Temperaturfühlerhaltevorrichtung ist zweckmäßigerweise so ausgestaltet, dass der Temperaturfühler auf der Temperaturfühlerhaltevorrichtung angeordnet werden kann, ohne dass ein Kurzschluss zwischen verschiedenen Bereichen des Temperaturfühlers auftritt. Insbesondere ist der als Band ausgebildete Temperaturfühler so auf der Temperaturfühlerhaltevorrichtung anordbar, dass kein elektrischer Kontakt zwischen verschiedenen Oberflächen oder Bereichen des Bandes kurzschlussartig stattfindet, sodass der elektrische Widerstand über die gesamte Länge des Bandes messbar ist. Zur Kalibration der Temperaturmessvorrichtung umfassend elektronische Auswerteeinheit und Temperaturfühler kann der Temperaturfühler mit einem eine Referenztemperatur aufweisenden Körper oder Stoff in thermischen Kontakt gebracht werden. Hierfür ist es vorteilhaft, dass die Temperaturfühlerhaltevorrichtung ein hitzebeständiges Material umfasst, sodass der Temperaturfühler der Referenztemperatur ausgesetzt werden kann, ohne dass die Temperaturfühlerhaltevorrichtung beschädigt wird. Eine vorteilhafte Temperaturbeständigkeit bietet beispielsweise der Stoff Makrolon oder andere Polykarbonate. Bevorzugt ist der die Referenztemperatur aufweisende Stoff Wasser, welches auf der Siedetemperatur gehalten wird. Unter atmosphärischen Normalbedingungen, insbesondere bei atmosphärischem Normaldruck, beträgt die Referenztemperatur ca. 100°C. Bevorzugt wird der auf der Temperaturfühlerhaltevorrichtung angeordnete Temperaturfühler in einer Menge kochenden Wassers versenkt und somit auf die Referenztemperatur von 100°C unter atmosphärischen Normalbedingungen gebracht. Hierdurch lässt sich die Temperaturmessvorrichtung umfassend Temperaturfühler und elektronische Auswerteeinheit kalibrieren.

In einer besonders bevorzugten Ausgestaltung des Kalibrationssets ist vorgesehen, dass die Temperaturfühlerhaltevorrichtung einen Grundkörper und einen Deckkörper umfasst, dass in dem Grundkörper Rezesse, insbesondere Einkerbungen oder Schlitze, angeordnet sind, dass der Temperaturfühler derart in den Rezessen anordbar ist, dass der Temperaturfühler spiralförmig oder wellenförmig an dem Grundkörper anordbar ist, dass der Deckkörper an dem Grundkörper anordbar ist, sodass der Temperaturfühler verliersicher in der Temperaturfühlerhaltevorrichtung gehalten ist, und dass bevorzugt der Deckkörper mit einem Haltemittel, insbesondere einer Schraube und/oder einer Klemme und/oder einem Gummiband und/oder einem hitzebeständigen und wiederverwendbaren Kleber, an dem Grundkörper befestigbar ist.

Durch die insbesondere vermittels der Rezesse gewährleistete spiralförmige oder wellenförmige Anordnung des Temperaturfühlers an dem Grundkörper kann der Temperaturfühler mit einem eine Referenztemperatur aufweisenden Körper oder Stoff in thermischen Kontakt gebracht werden, sodass sichergestellt wird, dass der Anwender keinem körperlichen Kontakt mit dem Temperaturfühler und/oder mit dem die Referenztemperatur aufweisenden Stoff oder Körper ausgesetzt wird. Wird beispielsweise der Temperaturfühler oder das Band verliersicher auf der Temperaturfühlerhaltevorrichtung gehalten, so kann das Band zusammen mit der Temperaturfühlerhaltevorrichtung in einer Menge kochenden Wassers versenkt werden, ohne dass ein Anwender in Kontakt mit dem kochenden Wasser kommt. Hierbei ist es besonders vorteilhaft, dass der Temperaturfühler beziehungsweise das Band spiralförmig oder wellenförmig auf der Temperaturfühlerhaltevorrichtung angeordnet ist. Dadurch kann sichergestellt werden, dass das kochende Wasser den Temperaturfühler allseitig benetzt und dass daher der Temperaturfühler gleichmäßig die Referenztemperatur annimmt.

Der Deckkörper, insbesondere der mit einer Schraube oder einem anderen Haltemittel am Grundkörper befestigte Deckkörper, gewährleistet dabei besonders die verliersichere Halterung des Temperaturfühlers an der Temperaturfühlerhaltevorrichtung. Durch die Verwendung einer Schraube oder eines anderen Haltemittels kann der Deckkörper einfach an dem Grundkörper angeordnet werden.

Bei einer weiteren zweckmäßigen Weiterbildung des Kalibrationssets ist vorgesehen, dass die Auswerteeinheit eine Steuerungseinheit, insbesondere einen Mikroprozessor, einen Energiespeicher, insbesondere einen Elektrolytkondensator, eine Kommunikationsvorrichtung, insbesondere eine USB-Schnittstelle und/oder eine Drahtlosverbindung und/oder eine optische Verbindung, für einen Datenaustausch zwischen der Auswerteeinheit und einem Mikrocomputer, insbesondere einem Personal Computer, und/oder eine eingebaute Anzeige und mindestens einen elektrischen Anschluss zur Verbindung mit den elektrischen Leitungen des Temperaturfühlers aufweist.

Mittels der Steuerungseinheit der Auswerteeinheit können die elektronischen Kennwerte des Temperaturfühlers, welcher über die elektrischen Leitungen des Temperaturfühlers mit dem elektrischen Anschluss der Auswerteeinheit verbunden ist, ausgelesen werden beziehungsweise können Spannungen oder Ströme an den Temperaturfühler angelegt werden. Die Steuerungseinheit ist dabei bevorzugterweise dazu ausgebildet, vordefinierte Spannungen oder Ströme an den Temperaturfühler anzulegen. Weiter ist die Steuerungseinheit vorteilhafterweise dazu ausgebildet, den elektrischen Widerstand des Temperaturfühlers zu messen. Darüber hinaus ist es mit der Steuerungseinheit der Auswerteeinheit möglich, Daten und/oder Informationen zwischen der Auswerteeinheit und einem Mikrocomputer, insbesondere einem Personal Computer, auszutauschen, wobei die Verbindung zwischen der Auswerteeinheit und dem Mikrocomputer bevorzugt über eine USB-Schnittstelle stattfindet. Jedoch kann auch jede andere geeignete Verbindung, wie beispielsweise eine Drahtlosverbindung oder eine optische Verbindung, vorgesehen sein. Die Steuerungseinheit übermittelt bevorzugt die Temperatur, die aus dem gemessenen elektrischen Widerstand des Temperaturfühlers ermittelt wurde, an den Mikrocomputer. Jedoch ist es prinzipiell auch möglich, dass der Mikrocomputer diese Funktion übernimmt und aus dem gemessenen elektrischen Widerstand direkt die gemessene Temperatur des Temperaturfühlers berechnet. Ferner ist der Mikrocomputer dazu ausgebildet, in bestimmten Intervallen oder vorbestimmten Zeitintervallen eine Abfrage der gemessenen Temperatur des Temperaturfühlers über die Steuerungseinheit anzufordern.

Der Mikrocomputer ist dazu ausgebildet, dass auf diesem eine Software oder ein elektronisches Programm installierbar und ausführbar ist. Mit der Software werden die über die Kommunikationsvorrichtung empfangenen Temperaturdaten oder Informationen der Auswerteeinheit weiter verarbeitet und übersichtlich dargestellt. Ferner ist es mit der Software möglich, die Temperaturmessvorrichtung, welche die Auswerteeinheit, den Temperaturfühler und gegebenenfalls den Mikrocomputer und die auf den Mikrocomputer ausführbare Software umfasst, im Hinblick auf eine Referenztemperatur zu kalibrieren. Wird beispielsweise der Temperaturfühler in Kontakt mit einem Stoff, der die Referenztemperatur aufweist, gebracht, so kann der bei dieser Referenztemperatur gemessene elektrische Widerstand des Temperaturfühlers der Referenztemperatur zugeordnet werden und als Datenpaar, insbesondere auf der Auswerteeinheit, abgespeichert werden. Vorteilhafterweise besitzt der ein metallisches Material umfassende Temperaturfühler eine bekannte Abhängigkeit des elektrischen Widerstandes von der Temperatur, insbesondere eine lineare Abhängigkeit, sodass aufgrund der bekannten Temperaturabhängigkeit des elektrischen Widerstandes und der Referenztemperatur eine Temperaturmessung des Temperaturfühlers über ein gewisses Temperaturintervall, welches die Referenztemperatur umfasst, möglich wird. Der Energiespeicher der Auswerteeinheit ist dazu ausgebildet, eine Spannung an den Temperaturfühler anzulegen. Die Spannung beträgt bevorzugt zwischen 0,5 V und 20 V, bevorzugt zwischen 1 V und 5 V, ganz besonders bevorzugt 2,2 V. Ein geeigneter Energiespeicher ist ein Elektrolytkondensator.

Ist die Auswerteeinheit mit einer eingebauten Anzeige, beispielsweise einer LED oder einem Bildschirm, ausgebildet, so kann auf den Mikrocomputer verzichtet werden und eine autarke Verwendung der Auswerteeinheit wird möglich. Insbesondere kann die Auswerteeinheit die Funktionen des Mikrocomputers übernehmen, sodass die Auswerteeinheit in bestimmten Intervallen oder vorbestimmten Zeitintervallen eine Abfrage der gemessenen Temperatur des Temperaturfühlers vornimmt und die gemessene Temperatur anzeigt. Gegebenenfalls kann auch auf die Kommunikationsvorrichtung verzichtet werden.

Eine weitere bevorzugte Ausgestaltung des Kalibrationssets sieht vor, dass das Kalibrationsset einen Datenspeicher, insbesondere einen USB-Stick oder eine CD-ROM, aufweist, dass auf dem Datenspeicher ein durch einen Mikrocomputer ausführbares Programm speicherbar ist, wobei das ausführbare Programm zur Anzeige und Speicherung der mit dem Temperaturfühler und der Auswerteeinheit gemessenen Temperatur und/oder zur Kalibration einer Temperaturmessvorrichtung umfassend den Temperaturfühler und die Auswerteeinheit ausgebildet ist.

Bevorzugt wird das ausführbare Programm auf dem Datenspeicher von dem Anwender auf den Mikrocomputer übertragen und dort installiert beziehungsweise ausgeführt. Das ausführbare Programm ist dazu ausgebildet, aus dem bevorzugt über eine Kommunikationsvorrichtung der Auswerteeinheit empfangenen Temperaturdaten des Temperaturfühlers, eine Temperatur anzuzeigen. Darüber hinaus ist es mit dem ausführbaren Programm möglich, einem gemessenen elektrischen Widerstand des Temperaturfühlers eine Referenztemperatur zuzuordnen und die Zuordnung an die Auswerteeinheit zu übermitteln, sodass eine Kalibrierung des Temperaturfühlers ermöglicht wird.

In einer besonders bevorzugten Ausgestaltung weist das Kalibrationsset Haltemittel, insbesondere Klemmmittel, zur Positionsfixierung des Temperaturfühlers auf dem Heizbandträger und/oder auf dem Heizelement des Heizbandträgers auf.

Zur Messung der tatsächlichen Betriebstemperatur/Schweißtemperatur des/der Heizelemente(s) beziehungsweise des Heizbandträgers wird der Temperaturfühler auf dem Heizbandträger angeordnet. Um ein nachteiliges Verrutschen des Temperaturfühlers gegenüber dem Heizbandträger zu verhindern wird der Temperaturfühler bevorzugt endseitig mittels der Haltemittel am Heizbandträger gehalten.

In einem weiteren Aspekt der Erfindung wird das zu lösende Problem mit einem Kalibrierverfahren für eine Schweißvorrichtung, insbesondere ein Folienschweiß- und/oder Heißsiegelgerät gelöst, wobei die Schweißvorrichtung einen unbeweglichen Heizbandträger mit oder ohne Heizelement und einen beweglichen Heizbandträger mit oder ohne Heizelement (im Folgenden Anpressbacke), insbesondere eine Anpressbacke, aufweist, zur Kalibration der Schweißtemperatur des Heizbandträgers oder der Schweißtemperatur mindestens eines Heizelementes an oder in dem Heizbandträger oder den Heizbandträgern und/oder des Anpressdruckes des beweglichen Heizbandträgers, insbesondere der Anpressbacke, durchführbar mit einem Kalibrationsset nach einer der vorbeschriebenen Ausgestaltungen, umfassend die Schritte der Wahl mindestens einer Referenztemperatur und/oder mindestens eines Referenzgewichtes, und Bestimmung einer Abweichung einer mit einem an der Referenztemperatur kalibrierten Temperaturfühler gemessenen tatsächlichen Betriebstemperatur/Schweißtemperatur des Heizbandträgers oder einer gemessenen tatsächlichen Betriebstemperatur des mindestens einen Heizelementes an oder in dem Heizbandträger oder den Heizbandträgern von einer vorgegebenen Betriebstemperatur und/oder Bestimmung einer Abweichung der mit einem Anpressdrucksensor der Schweißvorrichtung gemessenen Gewichtskraft des Referenzgewichtes von der tatsächlichen Gewichtskraft des Referenzgewichtes.

Wird der Schweißvorrichtung eine Betriebstemperatur/Schweißtemperatur vorgegeben, so kann die tatsächliche Betriebstemperatur des/der Heizelemente(s) an oder in dem/den Heizbandträger(n) von der vorgegebenen Betriebstemperatur abweichen. Durch den vorteilhaften Vergleich der mittels des kalibrierten Temperaturfühlers gemessenen tatsächlichen Betriebstemperatur/Schweißtemperatur des/der Heizelemente(s) an oder in dem/den Heizbandträger(n) mit der vorgegebenen Betriebstemperatur ist eine präzise einfache und kostengünstige Kalibration der Betriebstemperatur/Schweißtemperatur des/der Heizelemente an oder in dem/den Heizbandträger(n) möglich. Durch Kalibration des Temperaturfühlers an der Referenztemperatur kann sichergestellt werden, dass die Messung der tatsächlichen Betriebstemperatur des/der Heizelemente(s) auf oder in dem/den Heizbandträger(n) präzise erfolgt.

Ebenso kann durch die Bestimmung einer Abweichung der mit dem Anpressdrucksensor der Schweißvorrichtung gemessenen Gewichtskraft des Referenzgewichtes von der tatsächlichen Gewichtskraft des Referenzgewichtes auf eine Fehlkalibration des Anpressdrucksensors rückgeschlossen werden und durch entsprechende Bedienungsschritte der Schweißvorrichtung kann die Anpressdruckmessung kalibriert werden.

Eine bevorzugte Ausgestaltung des Kalibrierverfahrens ist dadurch gekennzeichnet, dass als Referenztemperatur etwa 100°C gewählt wird, wobei die Referenztemperatur bevorzugt durch Verwendung unter bei Normalbedingungen kochenden Wassers ermittelt wird, und/oder dass als Referenzgewicht ein genormtes, bevorzugt magnetisches oder magnetisiertes, Gewichtelement, insbesondere ein Gewichtelement mit der Masse 1 kg, 2 kg oder 5 kg gewählt wird.

Für die Bestimmung der Referenztemperatur wird vorzugsweise kochendes Wasser verwendet, welches unter atmosphärischen Normalbedingungen eine Siedetemperatur von 100°C aufweist. Wird das Kalibrierverfahren unter atmosphärischen Bedingungen durchgeführt, welche nicht den Normalbedingungen entsprechen, beispielsweise in großer Höhe, in denen der atmosphärische Druck nicht dem Normaldruck entspricht, so kann beispielsweise durch eine Software, eine Tabelle oder eine Berechnung, die Temperatur des siedenden oder kochenden Wassers unter den geänderten Bedingungen bestimmt werden und als Referenztemperatur festgelegt werden. Die Gewichtelemente können Teil eines Kalibrationssets sein, jedoch ist bevorzugt vorgesehen, dass die Gewichtelemente nicht Teil des Kalibrationssets sind. Vorteilhafterweise werden als Gewichtelemente genormte Gewichtelemente verwendet. Vorteilhaft liegen die Massen der normierten Gewichtelemente im Bereich von 1 kg bis 5 kg. Die Gewichtskräfte der Gewichtelemente liegen somit in einem typischen Gewichtskraftbereich, welcher dem Anpressdruck der Anpressbacke an den unbeweglichen Heizbandträger der Schweißvorrichtung entspricht.

Eine vorteilhafte Weiterbildung des Kalibrierverfahrens sieht vor, dass ein Temperaturfühler, insbesondere ein ein metallisches Material, bevorzugt eine metallische Legierung, umfassendes Band, in thermischem Kontakt mit einem die Referenztemperatur aufweisenden Stoff, insbesondere kochendem Wasser, gebracht wird, dass der temperaturabhängige elektrische Widerstand des Temperaturfühlers gemessen wird, und dass eine Temperaturmessvorrichtung umfassend den Temperaturfühler durch Zuordnung des gemessenen elektrischen Widerstandes an die Referenztemperatur kalibriert wird.

Durch die Zuordnung des gemessenen elektrischen Widerstandes des Temperaturfühlers, welcher auf die Referenztemperatur gebracht wurde, an den Wert der Referenztemperatur sowie im Zusammenspiel mit der bevorzugt bekannten Temperaturabhängigkeit des elektrischen Widerstandes des Temperaturfühlers kann der Temperaturfühler an die Referenztemperatur kalibriert werden. Eine Temperaturmessung über einen gewissen Temperaturbereich um die Referenztemperatur herum wird mit dem Temperaturfühler ermöglicht, sodass eine präzise Temperaturmessung auch von anderen, von der Referenztemperatur abweichenden, Temperaturen durch den Temperaturfühler möglich wird.

Insbesondere kann durch den an der Referenztemperatur kalibrierten Temperaturfühler die tatsächliche Betriebstemperatur des/der Heizelemente(s) an oder in dem/den Heizbandträger(n) präzise bestimmt werden.

In einer weiteren Ausgestaltung des Kalibrierverfahrens ist vorgesehen, dass der Temperaturfühler auf einer Temperaturfühlerhaltevorrichtung, insbesondere spiralförmig oder wellenförmig, angeordnet wird, und/oder dass der Temperaturfühler vollständig in kochendes Wasser getaucht wird.

Durch die spiralförmige oder wellenförmige Anordnung des Temperaturfühlers auf der Temperaturfühlerhaltevorrichtung wird sichergestellt, dass ein elektrischer Kurzschluss zwischen verschiedenen Bereichen oder Oberflächen des Temperaturfühlers ausgeschlossen wird. Somit wird beispielsweise der elektrische Widerstand des Temperaturfühlers, welcher bevorzugt als Band ausgebildet ist, über die gesamte Länge des Temperaturfühlers gemessen. Ein weiterer Vorteil der spiralförmigen oder wellenförmigen Anordnung auf der Temperaturfühlerhaltevorrichtung ist, dass der Temperaturfühler vollständig in kochendes Wasser getaucht werden kann, sodass jeder Bereich des Temperaturfühlers von dem kochenden Wasser benetzt wird. Eine gleichmäßige Annahme der Referenztemperatur durch den Temperaturfühler wird dadurch sichergestellt.

Eine weiter bevorzugte Ausgestaltung des Kalibrierverfahrens sieht vor, dass zur Messung des elektrischen Widerstandes des Temperaturfühlers eine Auswerteeinheit verwendet wird, wobei die Auswerteeinheit elektrisch mit dem Temperaturfühler verbunden wird, wobei die Auswerteeinheit bevorzugt eine Steuerungseinheit, insbesondere einen Mikroprozessor, und/oder eine Batterie, und/oder einen Energiespeicher, insbesondere einen Elektrolytkondensator, und/oder eine Kommunikationsvorrichtung, insbesondere eine USB-Schnittstelle, für einen Datenaustausch zwischen der Auswerteeinheit und einem Mikrocomputer, insbesondere einem Personal Computer, und/oder eine eingebaute Anzeige, und/oder mindestens einen elektrischen Anschluss zur Verbindung mit elektrischen Leitungen des Temperaturfühlers aufweist, wobei mittels der Auswerteeinheit bevorzugt ein elektrischer Strom und/oder eine Spannung an den Temperaturfühler angelegt wird, wobei die Spannung besonders bevorzugt zwischen 0,5 V und 20 V beträgt.

Weiter bevorzugt ist vorgesehen, dass zur Anzeige der tatsächlichen Betriebstemperatur ein auf einem Mikrocomputer ausführbares Programm verwendet wird, wobei das ausführbare Programm die tatsächliche Betriebstemperatur des Heizelementes oder der Heizelemente an oder in dem Heizbandträger oder den Heizbandträgern aus dem gemessenen elektrischen Widerstand des Temperaturfühlers anzeigt oder visualisiert, wobei die Auswerteeinheit die gemessenen Temperaturdaten bevorzugt über eine USB-Schnittstelle an den Mikrocomputer und das ausführbare Programm überträgt.

Zur Messung der tatsächlichen Betriebstemperatur des/der Heizelemente(s) an oder in dem/den Heizbandträger(n) wird der Temperaturfühler, welcher bevorzugt als Band ausgebildet ist, auf dem Heizbandträger beziehungsweise dem Heizelement des Heizbandträgers angeordnet. Hierbei ist es besonders bevorzugt, dass der Temperaturfühler oder das Band eine im Wesentlichen gleiche Länge und/oder im Wesentlichen gleiche Breite wie das Heizband des Heizbandträgers aufweist. Der Temperaturfühler ist daher derart auf dem Heizbandträger anordbar, dass der gesamte Heizbandträger mit dem Temperaturfühler abgedeckt ist und dass darüber hinaus Positionierungsfehler des Temperaturfühlers im Wesentlichen keinen oder nur einen geringen Einfluss auf die Messung der Betriebstemperatur des Heizbandträgers haben. Es kann somit vorteilhafterweise mit dem Temperaturfühler die tatsächliche Betriebstemperatur/Schweißtemperatur des/der Heizelemente(s) an oder in dem/den Heizbandträger(n) vermessen und mit der voreingestellten Betriebstemperatur/Schweißtemperatur verglichen werden, sodass etwaige Abweichungen mittels einer Steuerung der Schweißvorrichtung ausgeglichen werden können. Ist der Temperaturfühler zuvor an einer Referenztemperatur, beispielsweise der Temperatur kochenden Wassers, kalibriert worden, so ist eine besonders präzise Messung der tatsächlichen Betriebstemperatur des Heizbandträgers möglich. Die tatsächliche Betriebstemperatur kann dann beispielsweise mit einer Genauigkeit von +/- 5°C, bevorzugt +/- 3°C gemessen werden.

Eine weitere bevorzugte Ausgestaltung des Kalibrierverfahrens sieht vor, dass der bevorzugt an der Referenztemperatur kalibrierte Temperaturfühler in einen thermischen Kontakt mit dem Heizelement oder den Heizelementen an oder in dem Heizbandträger oder den Heizbandträgern und/oder der Anpressbacke gebracht wird, dass mindestens ein Schweißvorgang eingeleitet wird, dass durch Bestimmung des temperaturabhängigen Widerstandes die tatsächliche Betriebstemperatur oder Schweißtemperatur des Heizelementes oder der Heizelemente an oder in dem Heizbandträger oder den Heizbandträgern ermittelt wird, wobei vor Einleitung des Schweißvorganges bevorzugt eine Betriebstemperatur und/oder eine Schweißvorgangsdauer und/oder Kühlzeitdauer und/oder ein Anpressdruck vorgegeben wird.

Der bevorzugt als Band ausgebildete Temperaturfühler wird in thermischen Kontakt mit dem/den Heizelement(en) des/der Heizbandträger(s) gebracht. Durch Einleitung eines Schweißvorganges wird oder werden der/die Heizbandträger beziehungsweise das/die Heizelement(e) an oder in dem/den Heizbandträger(n) auf die eingestellte Betriebstemperatur erhitzt. Ferner wird für den Schweißvorgang eine Schweißvorgangsdauer und/oder eine Kühlzeit und/oder ein Anpressdruck vorgegeben. Durch Vorgabe dieser Parameter wird sichergestellt, dass die Betriebstemperatur, und/oder bei einem Intervallschweißgerät die durchschnittliche Betriebstemperatur/Schweißtemperatur, gemessen wird, und dass eine im Wesentlichen präzise Messung der tatsächlichen Betriebstemperatur oder der durchschnittlichen tatsächlichen Betriebstemperatur erfolgen kann. Der temperaturabhängige Widerstand wird bevorzugt von der Auswerteeinheit ausgelesen, welche über elektrische Leitungen in Kontakt mit dem Temperaturfühler steht. Die Bestimmung der Temperatur aus dem gemessenen elektrischen Widerstand wird weiter bevorzugt von der Auswerteeinheit durchgeführt, welche Informationen oder Temperaturdaten über eine Kommunikationsvorrichtung, insbesondere über eine USB-Schnittstelle, an den Mikrocomputer überträgt. Jedoch ist es prinzipiell auch möglich, dass der Mikrocomputer diese Funktion übernimmt und aus dem gemessenen elektrischen Widerstand direkt die gemessene Temperatur des Temperaturfühlers berechnet.

Eine weitere vorteilhafte Ausgestaltung des Kalibrierverfahrens sieht vor, dass mehrere Schweißgänge durchgeführt werden, und/oder dass, insbesondere bei Überschreiten einer gemessenen Mindesttemperatur des Heizelementes oder der Heizelemente an oder in dem Heizbandträger oder den Heizbandträgern, mehrmals pro Sekunde, bevorzugt ca. fünf Mal pro Sekunde, der elektrische Widerstand gemessen wird, und/oder dass bei Unterschreiten einer gemessenen Mindesttemperatur des Temperaturfühlers und/oder des Heizelementes oder der Heizelemente an oder in dem Heizbandträger oder den Heizbandträgern oder der Anpressbacke, beispielsweise 30°C, ca. alle 2 Sekunden der elektrische Widerstand gemessen wird.

Das/die Heizelement(e) an oder in dem/den Heizbandträger(n) ist/sind in der Regel mit einer Teflonschicht oder einer ähnlichen Schutzschicht abgedeckt. Somit wird bei Einleitung eines Schweißvorganges zunächst Zeit und Energie benötigt, um die Teflonschicht auf die Temperatur des/der Heizelemente(s) zu bringen. Wird sogleich bei einem ersten Schweißvorgang die Temperatur des/der Heizelemente an oder in dem/den Heizbandträger(n) gemessen, so kann es zu Fehlmessungen kommen, da die Teflonschicht noch nicht die Temperatur des/der Heizelemente(s) an oder in dem/den Heizbandträger(n) aufweist. Daher ist es vorteilhaft, dass im Rahmen der Messung mehrere Schweißvorgänge durchgeführt werden. Ferner ist es vorteilhaft, dass bei Unterschreiten einer gemessenen Mindesttemperatur des/der Heizelemente(s) an oder in dem/den Heizbandträger(n), beispielsweise 30°C, ca. alle 2 Sekunden der elektrische Widerstand gemessen wird. Durch Anlegen einer Spannung zur Messung des elektrischen Widerstandes an den Temperaturfühler fließt ein Strom durch den Temperaturfühler, welcher zu einer Eigenerwärmung des Temperaturfühlers führt. Ist die Mindesttemperatur des/der Heizelemente(s) an oder in dem/den Heizbandträger(n) noch nicht überschritten, kann durch den Betrieb des Temperaturfühlers eine messwertverfälschende Aufwärmung des Temperaturfühlers und/oder des/der Heizelemente(s) erfolgen. Daher ist es von Vorteil, dass unterhalb einer Mindesttemperatur in relativ weit auseinanderliegenden Zeitintervallen der Widerstand gemessen wird, um die Verfälschung des Messwertes der Temperatur gering zu halten. Wird die Mindesttemperatur des/der Heizelemente(s) auf oder in dem/den Heizbandträger(n) überschritten, können die Messintervalle verkürzt werden, sodass insbesondere ca. fünf Mal pro Sekunde der elektrische Widerstand gemessen wird. Liegt die Temperatur deutlich über der Mindesttemperatur, so ist der Einfluss der Erwärmung des Temperaturfühlers nur von geringer Relevanz, sodass die Intervalle für die Messung des Widerstandes kürzer gewählt werden. Darüber hinaus ist es von Vorteil, dass in Temperaturbereichen, die noch deutlich von der vorbestimmten Betriebstemperatur entfernt sind, nur mit großen Zeitintervallen der elektrische Widerstand gemessen wird, da eine hohe Präzision bei diesen niedrigen Temperaturen noch nicht erforderlich ist. Hierdurch wird Strom oder Energie gespart, da weniger Messzyklen pro Sekunde durchgeführt werden müssen. Insbesondere kann die Aufladungszeit des Energiespeichers der Auswerteeinheit, insbesondere des Elektrolytkondensators, verkürzt werden, sodass schneller Messungen bei höheren Temperaturen möglich werden.

In einer weiteren vorteilhaften Ausgestaltung des Kalibrierverfahrens ist vorgesehen, dass die ermittelte Abweichung der gemessenen tatsächlichen Betriebstemperatur oder Schweißtemperatur des Heizelementes oder der Heizelemente an oder in dem Heizbandträger oder den Heizbandträgern und/oder der Anpressbacke von der vorgegebenen Betriebstemperatur durch Änderung der Betriebsparameter, insbesondere der Leistung des Heizbandträgers, kompensiert wird.

Zur Änderung der Betriebsparameter des/der Heizelemente(s) an oder in dem/den Heizbandträger(n) beziehungsweise der Schweißvorrichtung insgesamt kann eine Steuervorrichtung, welche softwarebetrieben ist, in der Schweißvorrichtung vorgesehen sein. Bevorzugt können menügeführt über einen berührungsempfindlichen Bildschirm, beispielsweise über einen Touchscreen, die Betriebsparameter, wie insbesondere die Betriebstemperatur/Schweißtemperatur und der Anpressdruck der Schweißvorrichtung, gesteuert werden.

In einer besonders bevorzugten Ausgestaltung des Kalibrierverfahrens wird der Temperaturfühler mittels eines Haltemittels, insbesondere mittels eines Klemmmittels, positionsfixierend auf einem Heizbandträger und/oder auf dem Heizelement an oder in einem Heizbandträger gehalten.

Zur Messung der tatsächlichen Temperatur des/der Heizelemente(s) beziehungsweise des/der Heizbandträgers wird der Temperaturfühler auf einem Heizelement eines Heizbandträgers angeordnet. Um ein nachteiliges Verrutschen des Temperaturfühlers gegenüber dem Heizbandträger zu verhindern wird der Temperaturfühler bevorzugt endseitig mittels der Haltemittel am Heizbandträger gehalten.

Eine weitere bevorzugte Ausgestaltung des Kalibrierverfahrens sieht vor, dass mindestens ein Gewichtträger mit einem Anpressdrucksensor, bevorzugt durch eine Schraubverbindung, verbunden wird, und dass mindestens ein Referenzgewicht auf einer, insbesondere magnetischen oder magnetisierten, Gewichtauflagefläche des Gewichtträgers angeordnet wird, und dass die Summe der Gewichtskräfte des Referenzgewichtes und des Gewichtträgers mit dem Anpressdrucksensor und einer Anpressdruckmesselektronik gemessen wird, wobei die Anpressdruckmesselektronik bevorzugt innerhalb der Schweißvorrichtung angeordnet ist.

In einer weiteren Ausgestaltung des Kalibrierverfahrens ist vorgesehen, dass nacheinander mindestens zwei Referenzgewichte, bevorzugt ein 1 kg-Gewichtelement und ein 5 kg-Gewichtelement, auf der Gewichtauflagefläche des Gewichtträgers angeordnet werden, und dass jeweils die Summe der Gewichtskräfte des Referenzgewichtes und des Gewichtträgers oder der Gewichtträger mit dem Anpressdrucksensor oder den Anpressdrucksensoren und einer Anpressdruckmesselektronik gemessen wird, und dass die Anpressdruckmesselektronik eine, bevorzugt lineare, Gewichtsfunktion der gemessenen Gewichtskräfte in Abhängigkeit der tatsächlichen Gewichtskräfte der Referenzgewichte ermittelt.

Bevorzugt wird auf dem berührungsempfindlichen Bildschirm der Steuerung der Schweißvorrichtung der Kalibrations- oder Kalibrierungsmodus gewählt. Danach wird je ein erstes normiertes Gewichtelement, welches bevorzugt eine Masse von 1 kg aufweist, auf jeweils einen der mit den Anpressdrucksensoren verbundenen Gewichtträger gestellt und durch entsprechende Eingabeaufforderung wird die Steuerung der Schweißvorrichtung angewiesen, die Gewichtskräfte der normierten Gewichtelemente zu messen. Durch Benutzereingabe werden die gemessenen Gewichtskräfte gespeichert. Nachfolgend wird je ein zweites normiertes Gewichtelement, welches bevorzugt eine Masse von 5 kg aufweist, auf der Gewichtauflagefläche der Gewichtträger angeordnet, und durch Benutzereingabe wird die Steuerung der Schweißvorrichtung angewiesen, die Gewichtskraftwerte zu ermitteln. Die gemessenen Gewichtskräfte werden durch Benutzereingabe gespeichert. Besonders bevorzugt gibt die Steuerung der Schweißvorrichtung vor, welche Gewichtelemente, beziehungsweise in welcher Reihenfolge die Gewichtelemente auf den Gewichtträgern und somit auf den Anpressdrucksensoren positioniert werden sollen. Die Messelektronik ermittelt nun einen bevorzugt linearen Zusammenhang zwischen den tatsächlichen Gewichtskräften der normierten Gewichtelemente und den gemessenen Gewichtskräften und kann daher eine Abhängigkeit einer gemessenen Gewichtskraft von einer tatsächlichen Gewichtskraft bestimmen. Mit anderen Worten bestimmt im Fall eines linearen Zusammenhanges die Messvorrichtung die Steigung der Gewichtsfunktion, welche die gemessene Gewichtskraft in Abhängigkeit der tatsächlichen Gewichtskraft darstellt.

In einer weiteren bevorzugten Ausgestaltung des Verfahrens ist vorgesehen, dass das mindestens eine Referenzgewicht von der Gewichtauflagefläche des Gewichtträgers entfernt wird, dass der mindestens eine Gewichtträger von dem Anpressdrucksensor oder den Anpressdrucksensoren gelöst und entfernt wird, und dass nach einer Benutzereingabe der Nullwert der Gewichtskraft des unbelasteten Anpressdrucksensors gemessen wird, und dass die Anpressdruckmesselektronik auf Grundlage der Steigung der Gewichtsfunktion und des Nullwertes die Anpressdruckmessung kalibriert.

Nach Entfernen der normierten Gewichtelemente und des mindestens einen Gewichtträgers ist der Anpressdrucksensor im Wesentlichen unbelastet. Durch Benutzereingabe kann somit der Nullwert der Gewichtskraft eingelesen werden. Zusammen mit dem vorhergegangenen Schritt der Bestimmung der Steigung des linearen Zusammenhanges zwischen der gemessenen Gewichtskraft und der tatsächlichen Gewichtskraft und mit dem festgelegten Nullwert ist somit eine präzise Kalibration der Anpressdruckmessung möglich.

### Kurze Beschreibung der Zeichnungen

Ausführungsbeispiele der Erfindung werden nachstehend anhand der Zeichnungen näher erläutert. Es zeigen
Fig. 1 eine perspektivische Ansicht einer Schweißvorrichtung mit einem Temperaturfühler und einer elektronischen Auswerteeinheit eines Kalibrationssets,
Fig. 2 eine Seitenansicht einer Anpressbacke und eines Heizbandträgers der Schweißvorrichtung,
Fig. 3 einen auf einer Temperaturfühlerhaltevorrichtung angeordneten Temperaturfühler,
Fig. 4 einen Gewichtträger des Kalibrationssets, und
Fig. 5 eine schematische Ansicht der Anpressbacke und des unbeweglichen Heizbandträgers der Schweißvorrichtung mit an Anpressdrucksensoren angeordneten Gewichtträgern.

### Bevorzugte Ausführungsformen der Erfindung

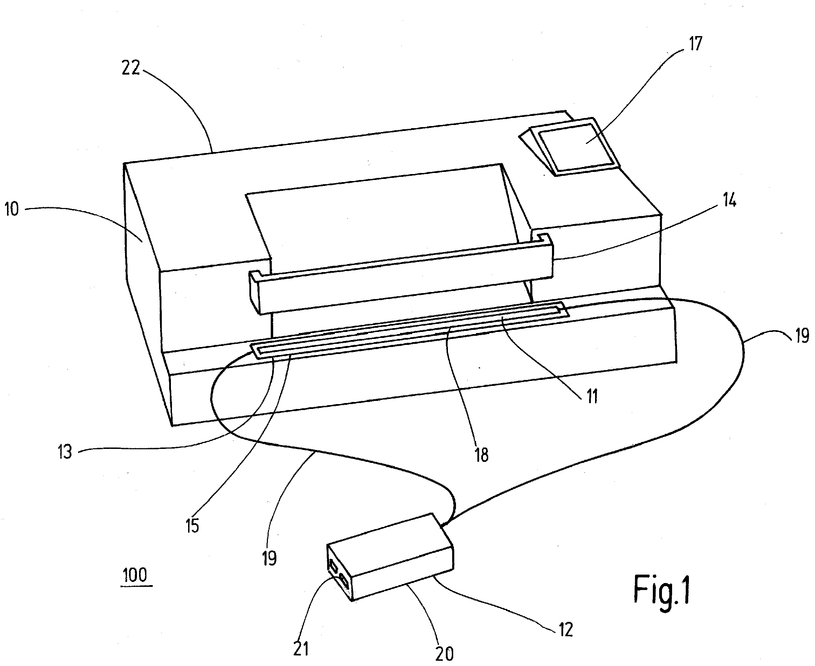

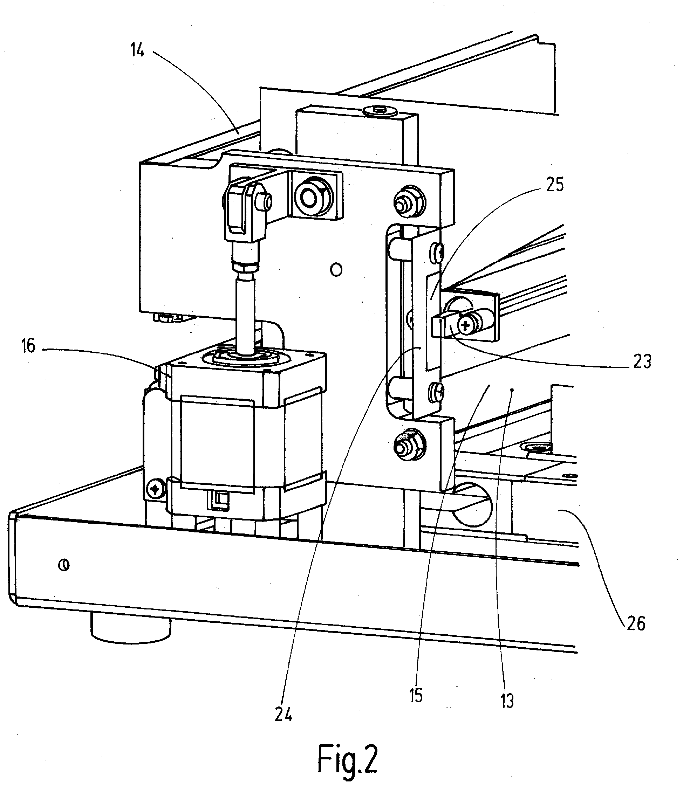

Die Fig. 1 zeigt eine Schweißvorrichtung 10, welche als Folienschweißgerät oder als Heißsiegelgerät ausgebildet ist, sowie einen Temperaturfühler 11 und eine elektrische Auswerteeinheit 12 eines Kalibrationssets 100 für eine Schweißvorrichtung im Einklang mit der Erfindung. Die Schweißvorrichtung 10 weist einen Heizbandträger 13 sowie einen beweglichen Heizbandträger, welcher als Anpressbacke 14 ausgebildet ist, auf. Der Heizbandträger 13 umfasst ein als Heizband 15 ausgebildetes Heizelement. Auch die Anpressbacke 14 kann ein Heizelement aufweisen. Im Betrieb der Schweißvorrichtung 10 werden zu verschweißende Folien zwischen dem Heizbandträger 13 und der Anpressbacke 14 angeordnet. Die Anpressbacke 14 wird mittels eines Antriebsmotors 16 (Fig. 2) nach unten in Richtung des Heizbandträgers 13 verfahren. Die Anpressbacke 14 presst die zwischen Anpressbacke 14 und Heizbandträger 13 angeordneten Folien unter einem vorbestimmten Druck zusammen. Die zusammengepressten Folien werden mit dem erhitzen Heizband 15 des Heizbandträgers 13 entlang der gewünschten Schweißlinie erhitzt, sodass zu einem Verschmelzen der Folien beziehungsweise zur Ausbildung einer Schweißnaht kommt.

Zur Einstellung und Vorbestimmung der Betriebsparameter der Schweißvorrichtung 10 weist diese einen berührungsempfindlichen Bildschirm 17 auf, über welchen ein Anwender menügeführt die Betriebsparameter der Schweißvorrichtung 10 einstellen kann. Der Temperaturfühler 11 ist als ein metallisches Band 18 ausgebildet und oberhalb beziehungsweise an dem Heizbandträger 13 angeordnet. Die Länge des metallischen Bandes 18 entspricht dabei in etwa der Länge des Heizbandträgers 13. Endseitig sind an dem metallischen Band 18 elektrische Leitungen 19 angeordnet. Über die elektrischen Leitungen 19 ist der Temperaturfühler 11 mit der elektrischen Auswerteeinheit 12 verbunden. Die elektrische Auswerteeinheit 12 umfasst einen hier nicht dargestellten elektrischen Anschluss zur Verbindung der Auswerteeinheit 12 mit dem Temperaturfühler 11. Weiter weist die elektrische Auswerteeinheit 12 auf einer Seite des Gehäuses 20 der Auswerteeinheit 12 eine USB-Schnittstelle 21 auf. Über die USB-Schnittstelle 21 kann die Auswerteeinheit 12 mit einem Personal Computer (hier nicht gezeigt) verbunden werden.

Fig. 2 zeigt eine perspektivische Ansicht der Schweißvorrichtung 10 mit geöffneter Abdeckung 22 (Fig. 1). Zu erkennen ist die Anpressbacke 14 sowie der Heizbandträger 13 umfassend Heizband 15. Weiter ist in Fig. 2 der Antriebsmotor 16 gezeigt, mit welchem die Anpressbacke 14 auf dem Heizbandträger verfahren und gegen diesen angedrückt werden kann. Zur Kontrolle des Fahrweges der Anpressbacke 14 ist ein optischer Sensor 23 vorgesehen. Beim Verfahren der Anpressbacke 14 wird ein Balkencodehalter 24 mit einem aufgedruckten Balkencode 25 gegenüber dem optischen Sensor 23 verfahren, sodass mit dem optischen Sensor 23 der Verfahrweg der Anpressbacke 14 überwacht werden kann.

Unterhalb des Heizbandträgers 13 befindet sich endseitig je ein Anpressdrucksensor 26, welcher bevorzugt Dehnungsmessstreifen umfasst. Wird die Anpressbacke 14 mittels des Antriebsmotors 16 auf den Heizbandträger 13 verfahren und angedrückt, so kann mittels der unterhalb des Heizbandträgers 13 an-geordneten Anpressdrucksensoren 26 der Anpressdruck der Anpressbacke 14 gemessen werden. Die Anpressbacke kann unbeheizt sein, jedoch kann die Anpressbacke 14 ebenfalls ein beheizbares Heizband zum Verschweißen der zwischen Anpressbacke und Heizbandträger 13 angeordneten Folien aufweisen.

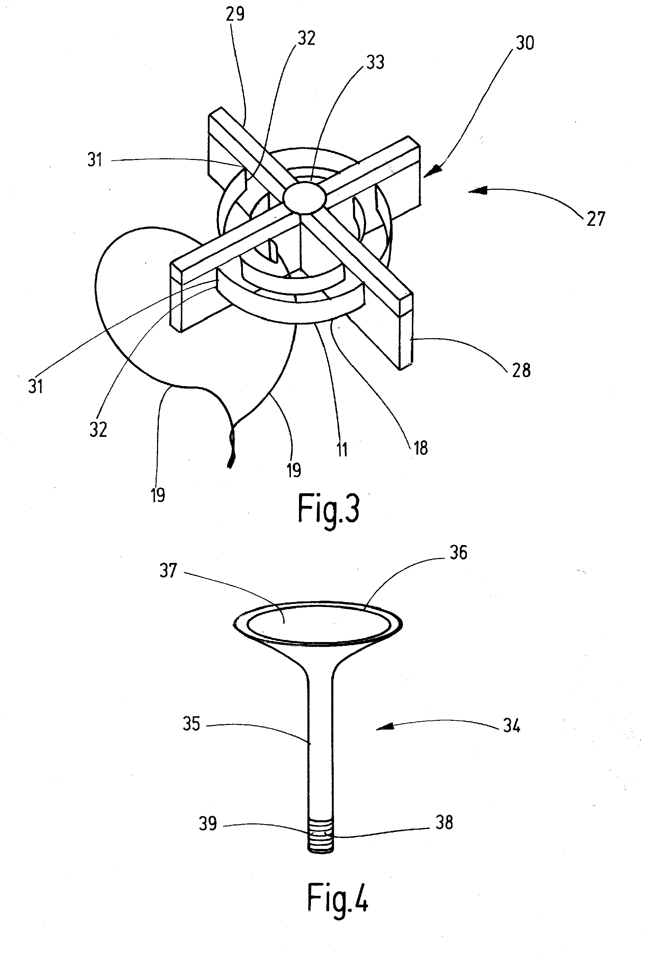

In Fig. 3 ist eine Temperaturfühlerhaltevorrichtung 27 dargestellt. Die Temperaturfühlerhaltevorrichtung 27 weist einen Grundkörper 28 sowie einen Deckkörper 29 auf. Sowohl Grundkörper 28 als auch Deckkörper 29 sind in etwa kreuz- oder X-förmig ausgestaltet. In einem dem Deckkörper 29 der Temperaturfühlerhaltevorrichtung 27 zugewandten oberen Bereich 30 sind in den Grundkörper 28 mehrere Rezesse 31 in Form von Schlitzen 32 angeordnet. Der als metallisches Band 18 ausgebildete Temperaturfühler 11 ist spiralförmig in den Rezessen 31 des Grundkörpers 28 aufgenommen, sodass kein Kurzschluss zwischen verschiedenen Bereichen oder verschiedenen Bereichen der Oberfläche des Temperaturfühlers 11 auftritt. Der Deckkörper 29 ist oberhalb des Grundkörpers 28 angeordnet und mittels einer Schraube 33 an dem Grundkörper 28 befestigt. Endseitig des metallischen Bandes 18 des Temperaturfühlers 11 sind elektrische Leitungen 19 zur Verbindung des Temperaturfühlers 11 mit der elektrischen Auswerteeinheit 12 angeordnet. Die Dimensionen der Temperaturfühlerhaltevorrichtung 27 sind derart gewählt, dass ein die in etwa kreuzförmige Grundform der Temperaturfühlerhaltevorrichtung 27 umschreibender Kreis kleiner oder in etwa gleich dem Boden einer Wassererwärmvorrichtung, wie beispielsweise einem handelsüblichen Topf, ist.

Zur Kalibrierung der Temperaturmessvorrichtung umfassend Temperaturfühler 11 und Auswerteeinheit 12 wird der auf der Temperaturfühlerhaltevorrichtung 27 angeordnete Temperaturfühler 11 in ein Gefäß mit kochendem Wasser versenkt. Mit der Auswerteeinheit 12, welche über die elektrischen Leitungen 19 mit dem Temperaturfühler 11 verbunden ist, wird beispielsweise durch Anlegen einer Spannung an den Temperaturfühler 11 der temperaturabhängige elektrische Widerstand des metallischen Bandes 18 des Temperaturfühlers 11 ausgelesen. Hierzu weist die Auswerteeinheit 12 einen Mikroprozessor auf. Der Mikroprozessor sendet über die USB-Schnittstelle 21 der Auswerteeinheit 12 Temperaturdaten bezüglich der aus dem gemessenen elektrischen Widerstandes des Temperaturfühlers 11 ermittelten Temperatur an einen Mikrocomputer. Ein auf dem Mikrocomputer ausführbares Programm visualisiert daraufhin aus den Daten betreffend den elektrischen Widerstand des Temperaturfühlers 11 die Temperatur T des Temperaturfühlers 11. Unter Normalbedingungen beträgt die Temperatur des kochenden Wassers ca. 100°C. Zeigt das ausführbare Programm auf dem Mikrocomputer einen von 100°C abweichenden Wert der Temperatur T, so kann mittels des ausführbaren Programmes dem gemessenen, temperaturabhängigen elektrischen Widerstand des Temperaturfühlers 11 der Temperaturwert von 100°C zugeordnet werden und die Zuordnung kann der Auswerteeinheit übermittelt werden. Hierdurch wird die Temperaturmessvorrichtung umfassend Temperaturfühler 11 und Auswerteeinheit 12 an einer Referenztemperatur von ca. 100°C kalibriert. Aufgrund der bekannten Temperaturabhängigkeit des elektrischen Widerstandes des metallischen Bandes 18 des Temperaturfühlers 11 kann somit mit hoher Präzision über einen gewissen Temperaturbereich, welcher die Referenztemperatur von 100°C umfasst, die Temperatur des Temperaturfühlers bestimmt werden.

Nach der Kalibration der Temperaturmessvorrichtung wird das metallische Band 18 des Temperaturfühlers 11 von der Temperaturfühlerhaltevorrichtung 27 entfernt und entrollt. Das metallische Band 18 des Temperaturfühlers 11 wird dann, wie in Fig. 1 gezeigt, auf dem Heizbandträger 13 der Schweißvorrichtung 10 angeordnet. Darauffolgend wird eine Folge von mehreren Schweißvorgängen gestartet, während deren die Temperaturmessvorrichtung umfassend Temperaturfühler 11 und Auswerteeinheit 12 jeweils die Temperatur des Heizbandträgers 13 misst. Hierzu wird wiederum der elektrische Widerstand des metallischen Bandes 18 durch die Auswerteeinheit 12 ausgelesen und über die USB-Schnittstelle 21 an den Mikrocomputer gesendet. Wird eine Abweichung der voreingestellten Betriebstemperatur des Heizbandträgers 13 der Schweißvorrichtung 10 gegenüber der tatsächlich mit dem Temperaturfühler 11 und der Auswerteeinheit 12 gemessenen Temperatur T festgestellt, so kann durch eine menügeführte Steuerung über den berührungsempfindlichen Bildschirm 17 die Schweißvorrichtung 10 im Hinblick auf die Betriebstemperatur kalibriert werden.

Fig. 4 zeigt einen Gewichtträger 34. Der Gewichtträger 34 weist ein längliches Tragelement 35 auf und ist in etwa pilz-, platten-, ständer- oder tischförmig ausgebildet. Endseitig ist an dem Tragelement eine Gewichtauflagefläche 36 angeordnet. In die Gewichtauflagefläche 36 ist eine Magnetscheibe 37 eingelassen. Auf dem der Gewichtauflagefläche abgewandten Ende des Tragelementes 35 ist eine als Gewindeabschnitt 38 ausgebildetes Verbindungselement 39 angeordnet.

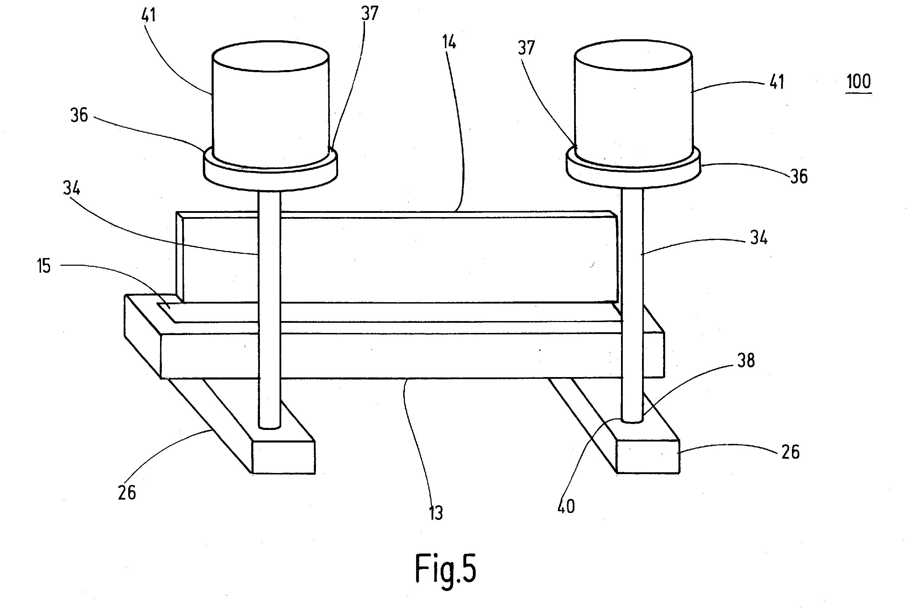

Fig. 5 zeigt in einer schematischen Ansicht die Verwendung des Kalibrationssets 100 zur Kalibration des Anpressdruckes p des Anpressbackens 14 der Schweißvorrichtung 10. Unterhalb der Anpressbacke 14 ist der Heizbandträger 13 umfassend das Heizband 15 angeordnet. Der Heizbandträger 13 ist endseitig oberhalb von zwei Anpressdrucksensoren 26 angeordnet. Jeweils ein Gewichtträger 34 ist mit dem Gewindeabschnitt 38 in einer Aufnahmebohrung 40 der Anpressdrucksensoren 26 aufgenommen. Auf der Gewichtauflagefläche 36 der Gewichtträger 34 sind genormte Gewichtelemente 41 angeordnet. Die Gewichtelemente sind magnetisch oder magnetisiert und werden daher durch die magnetische Wirkung der Magnetscheibe 37 lösbar auf der Gewichtauflagefläche 36 der Gewichtträger 34 fixiert. Zur Kalibrierung des Anpressdruckes p der Anpressbacke 14 wird zunächst auf jedem der beiden Gewichtträger 34 ein genormtes Gewichtelement, beispielsweise der Masse 1 kg, angeordnet und durch Benutzereingabe auf dem berührungsempfindlichen Bildschirm 17 der Schweißvorrichtung 10 werden die jeweils gemessenen Summen der Gewichtskräfte je eines der Gewichtelemente 41 und eines der Gewichtträger 34 eingelesen. Anschließend werden die genormten Gewichtelemente der Masse 1 kg von der Gewichtauflagefläche 36 der Gewichtträger 34 entfernt und auf jeden der Gewichtträger 34 wird anschließend ein weiteres genormtes Gewichtelement 41, beispielsweise der Masse 5 kg, abgelegt. Erneut wird durch Benutzereingabe die Summe der Gewichtskräfte der genormten Gewichtelemente 41 und der Gewichtträger 34 mittels der Anpressdrucksensoren 26 gemessen und abgespeichert. In einem nächsten Schritt werden sämtliche Gewichtelemente 41 sowie die Gewichtträger 34 von den Anpressdrucksensoren 26 entfernt und durch weitere Benutzereingabe auf dem berührungsempfindlichen Bildschirm 17 der Schweißvorrichtung 10 wird der Nullwert für den unbelasteten Heizbandträger 13 festgelegt. Durch die vorhergehende Messung der normierten Gewichtelemente 41 kann aus den gemessenen Gewichtskräften für die 1 kg-Gewichtelemente und die 5 kg-Gewichtelemente der lineare Zusammenhang zwischen der gemessenen Gewichtskraft und der tatsächlichen Gewichtskraft, das heißt die Steigung der Gewichtsfunktion bestimmt werden. Zusammen mit der Festlegung des Nullwertes des Anpressdruckes p wird somit die Anpressdruckmessung der Schweißvorrichtung 10 kalibriert.

### Liste der Bezugszeichen

- 100: Kalibrationsset
- 10: Schweißvorrichtung
- 11: Temperaturfühler
- 12: Auswerteeinheit
- 13: Heizbandträger
- 14: Anpressbacke
- 15: Heizband
- 16: Antriebsmotor
- 17: Berührungsempfindlicher Bildschirm
- 18: Metallisches Band
- 19: Elektrische Leitung
- 20: Gehäuse
- 21: USB-Schnittstelle
- 22: Abdeckung
- 23: Optischer Sensor
- 24: Strichcodehalter
- 25: Strichcode
- 26: Anpressdrucksensor
- 27: Temperaturfühlerhaltevorrichtung
- 28: Grundkörper
- 29: Deckkörper
- 30: Oberer Bereich
- 31: Rezesse
- 32: Schlitz
- 33: Schraube
- 34: Gewichtträger
- 35: Tragelement
- 36: Gewichtauflagefläche
- 37: Magnetscheibe
- 38: Gewindeabschnitt
- 39: Verbindungselement
- 40: Aufnahmebohrung
- 41: Gewichtelemente

- T: Temperatur/Schweißtemperatur
- P: Anpressdruck

## Patentansprüche

1. Kalibrationsset (100) für eine Schweißvorrichtung (10), insbesondere ein Folienschweiß- und/oder Heißsiegelgerät, wobei die Schweißvorrichtung (10) einen unbeweglichen Heizbandträger (13) mit oder ohne Heizelement und einen beweglichen Heizbandträger mit oder ohne Heizelement, insbesondere eine Anpressbacke (14), aufweist, geeignet zur Durchführung eines Kalibrierverfahrens zur Kalibration der Schweißtemperatur (T) des Heizbandträgers (13) und/oder der Schweißtemperatur (T) eines oder mehrerer Heizelemente an oder in dem Heizbandträger (13) oder den Heizbandträgern (13, 14) und/oder des Anpressdruckes (p) des beweglichen Heizbandträgers, insbesondere der Anpressbacke (14), **dadurch gekennzeichnet, dass** das Kalibrationsset einen Temperaturfühler (11) sowie eine mit dem Temperaturfühler (11) verbindbare elektronische Auswerteeinheit (12) umfasst, und/oder dass das Kalibrationsset mindestens einen mit einem Anpressdrucksensor (26) der Schweißvorrichtung (10) verbindbaren Gewichtträger (34) umfasst.

2. Kalibrationsset nach Anspruch 1, **dadurch gekennzeichnet, dass** zwei Gewichtträger (34) vorgesehen sind, dass die Gewichtträger (34) in etwa pilzförmig, plattenförmig, ständerförmig oder tischförmig ausgebildet sind und ein längliches Tragelement (35) sowie eine endseitig an dem Tragelement (35) angeordnete Gewichtauflagefläche (36) aufweisen.

3. Kalibrationsset nach einem der Ansprüche 1 und 2, **dadurch gekennzeichnet, dass** die Gewichtauflagefläche (36) magnetisch oder magnetisiert ist, und/oder dass an dem der Gewichtauflagefläche (36) gegenüberliegenden Ende des Tragelementes (35) ein Verbindungselement (39), insbesondere ein Gewindeabschnitt (38), angeordnet ist.

4. Kalibrationsset nach einem der vorgenannten Ansprüche, **dadurch gekennzeichnet, dass** der Temperaturfühler (11) als eine Platine oder ein Thermometer ausgebildet ist und/oder dass der Temperaturfühler (11) als ein Band (18) ausgebildet ist und ein metallisches Material, insbesondere eine metallische Legierung, umfasst, dass die Länge des Bandes (18) bevorzugt im Wesentlichen der Länge des unbeweglichen Heizbandträgers (13) entspricht, und dass besonders bevorzugt an den Enden des Bandes (18) jeweils eine elektrische Leitung (19) angeordnet ist, wobei die elektrischen Leitungen (19) mit mindestens einem elektrischen Anschluss der Auswerteeinheit (12) verbindbar sind.

5. Kalibrationsset nach einem der vorgenannten Ansprüche, **dadurch gekennzeichnet, dass** das Kalibrationsset eine, insbesondere kreuzförmige, Temperaturfühlerhaltevorrichtung (27) umfasst, dass der Temperaturfühler (11) auf und/oder in der Temperaturfühlerhaltevorrichtung (27), bevorzugt spiralförmig oder wellenförmig, anordbar ist, und dass die Temperaturfühlerhaltevorrichtung (27) ein hitzebeständiges Material, insbesondere Makrolon oder ein Polykarbonat, umfasst.

6. Kalibrationsset nach Anspruch 5, **dadurch gekennzeichnet, dass** die Temperaturfühlerhaltevorrichtung (27) einen Grundkörper (28) und einen Deckkörper (29) umfasst, dass in dem Grundkörper (28) Rezesse (31), insbesondere Einkerbungen oder Schlitze (32), angeordnet sind, dass der Temperaturfühler (11) derart in den Rezessen (31) anordbar ist, dass der Temperaturfühler (11) spiralförmig oder wellenförmig an dem Grundkörper (28) anordbar ist, dass der Deckkörper (29) an dem Grundkörper (28) anordbar ist, sodass der Temperaturfühler (11) verliersicher in der Temperaturfühlerhaltevorrichtung (27) gehalten ist, und dass bevorzugt der Deckkörper (29) mit einem Haltemittel, insbesondere einer Schraube (33) und/oder einer Klemme und/oder einem Gummiband und/oder einem hitzebeständigen und wiederverwendbaren Kleber, an dem Grundkörper (28) befestigbar ist.

7. Kalibrationsset nach einem der vorgenannten Ansprüche, **dadurch gekennzeichnet, dass** die Auswerteeinheit (12) eine Steuerungseinheit, insbesondere einen Mikroprozessor, einen Energiespeicher, insbesondere einen Elektrolytkondensator, eine Kommunikationsvorrichtung, insbesondere eine USB-Schnittstelle (21) und/oder eine Drahtlosverbindung und/oder eine optische Verbindung, für einen Datenaustausch zwischen der Auswerteeinheit (12) und einem Mikrocomputer, insbesondere einem Personal Computer, und/oder eine eingebaute Anzeige und mindestens einen elektrischen Anschluss zur Verbindung mit den elektrischen Leitungen (19) des Temperaturfühlers (11) aufweist.

8. Kalibrationsset nach einem der vorgenannten Ansprüche, **dadurch gekennzeichnet, dass** das Kalibrationsset einen Datenspeicher, insbesondere einen USB-Stick oder eine CD-ROM, aufweist, dass auf dem Datenspeicher ein durch einen Mikrocomputer ausführbares Programm speicherbar ist, wobei das ausführbare Programm zur Anzeige und Speicherung der mit dem Temperaturfühler (11) und der Auswerteeinheit (12) gemessenen Temperatur (T) und/oder zur Kalibration einer Temperaturmessvorrichtung umfassend den Temperaturfühler (11) und die Auswerteeinheit (12) ausgebildet ist.

9. Kalibrierverfahren für eine Schweißvorrichtung (10), insbesondere ein Folienschweiß- und/oder Heißsiegelgerät, wobei die Schweißvorrichtung (10) einen unbeweglichen Heizbandträger (13) mit oder ohne Heizelement und einen beweglichen Heizbandträger mit oder ohne Heizelement, insbesondere eine Anpressbacke (14), aufweist, zur Kalibration der Schweißtemperatur (T) des Heizbandträgers (13) oder der Schweißtemperatur (T) mindestens eines Heizelementes (15) an oder in dem Heizbandträger (13) oder den Heizbandträgern (13, 14) und/oder des Anpressdruckes (p) des beweglichen Heizbandträgers (14), insbesondere der Anpressbacke (14), durchführbar mit einem Kalibrationsset nach einem der Ansprüche 1 bis 8, umfassend die Schritte der Wahl mindestens einer Referenztemperatur und/oder mindestens eines Referenzgewichtes, und Bestimmung einer Abweichung einer mit einem an der Referenztemperatur kalibrierten Temperaturfühler (11) gemessenen tatsächlichen Betriebstemperatur des Heizbandträgers (13) oder einer gemessenen tatsächlichen Betriebstemperatur des mindestens einen Heizelementes (15) an oder in dem Heizbandträger (13) oder den Heizbandträgern (13, 14) von einer vorgegebenen Betriebstemperatur und/oder Bestimmung einer Abweichung der mit einem Anpressdrucksensor (26) der Schweißvorrichtung (10) gemessenen Gewichtskraft des Referenzgewichtes von der tatsächlichen Gewichtskraft des Referenzgewichtes.

10. Kalibrierverfahren nach Anspruch 9, **dadurch gekennzeichnet, dass** als Referenztemperatur etwa 100° gewählt wird, wobei die Referenztemperatur bevorzugt durch Verwendung unter bei Normalbedingungen kochenden Wassers ermittelt wird, und/oder dass als Referenzgewicht ein genormtes, bevorzugt magnetisches oder magnetisiertes, Gewichtelement (41), insbesondere ein Gewichtelement (41) mit der Masse 1 kg, 2 kg oder 5 kg, gewählt wird.

11. Kalibrierverfahren nach Anspruch 9 oder 10, **dadurch gekennzeichnet, dass** ein Temperaturfühler (11), insbesondere ein ein metallisches Material, bevorzugt eine metallische Legierung, umfassendes Band (18), in thermischen Kontakt mit einem die Referenztemperatur aufweisenden Stoff, insbesondere kochendem Wasser, gebracht wird, dass der temperaturabhängige elektrische Widerstand des Temperaturfühlers (11) gemessen wird, und dass eine Temperaturmessvorrichtung umfassend den Temperaturfühler (11) durch Zuordnung des gemessenen elektrischen Widerstandes an die Referenztemperatur kalibriert wird.

12. Kalibrierverfahren nach einem der Ansprüche 9 bis 11, **dadurch gekennzeichnet, dass** der Temperaturfühler (11) auf einer Temperaturfühlerhaltevorrichtung (27), insbesondere spiralförmig oder wellenförmig, angeordnet wird, und/oder dass der Temperaturfühler (11) vollständig in kochendes Wasser getaucht wird.

13. Kalibrierverfahren nach einem der Ansprüche 9 bis 12, **dadurch gekennzeichnet, dass** zur Messung des elektrischen Widerstandes des Temperaturfühlers (11) eine Auswerteeinheit (12) verwendet wird, wobei die Auswerteeinheit (12) elektrisch mit dem Temperaturfühler (11) verbunden wird, wobei die Auswerteeinheit (12) bevorzugt eine Steuerungseinheit, insbesondere einen Mikroprozessor, und/oder eine Batterie, und/oder einen Energiespeicher, insbesondere einen Elektrolytkondensator, und/oder eine Kommunikationsvorrichtung, insbesondere eine USB-Schnittstelle (21), für einen Datenaustausch zwischen der Auswerteeinheit (12) und einem Mikrocomputer, insbesondere einem Personal Computer, und/oder eine eingebaute Anzeige, und/oder mindestens einen elektrischen Anschluss zur Verbindung mit den elektrischen Leitungen (19) des Temperaturfühlers (11) aufweist, wobei mittels der Auswerteeinheit (12) bevorzugt ein elektrischer Strom und/oder eine Spannung an den Temperaturfühler (11) angelegt wird, wobei die Spannung besonders bevorzugt zwischen 0,5V und 20V beträgt.

14. Kalibrierverfahren nach einem der Ansprüche 9 bis 13, **dadurch gekennzeichnet, dass** zur Anzeige der tatsächlichen Betriebstemperatur ein auf einem Mikrocomputer ausführbares Programm verwendet wird, wobei das ausführbare Programm die tatsächliche Betriebstemperatur des Heizelementes oder der Heizelemente an oder in dem Heizbandträger (13) oder den Heizbandträgern (13) aus dem gemessenen elektrischen Widerstand des Temperaturfühlers (11) anzeigt, wobei die Auswerteeinheit (12) die gemessenen Temperaturdaten bevorzugt über eine USB-Schnittstelle (21) an den Mikrocomputer und das ausführbare Programm überträgt.

15. Kalibrierverfahren nach einem der Ansprüche 9 bis 14, **dadurch gekennzeichnet, dass** der bevorzugt an der Referenztemperatur kalibrierte Temperaturfühler (11) in einen thermischen Kontakt mit dem Heizelement oder den Heizelementen an oder in dem Heizbandträger (13) oder den Heizbandträgern (13, 14) und/oder der Anpressbacke gebracht wird, dass mindestens ein Schweißvorgang eingeleitet wird, dass durch Bestimmung des temperaturabhängigen Widerstandes die tatsächliche Betriebstemperatur oder Schweißtemperatur (T) des Heizelementes oder der Heizelemente an oder in dem Heizbandträger (13) oder den Heizbandträgern (13, 14) ermittelt wird, wobei vor Einleitung des Schweißvorganges bevorzugt eine Betriebstemperatur und/oder eine Schweißvorgangsdauer und/oder eine Kühlzeitdauer und/oder ein Anpressdruck vorgegeben wird.

16. Kalibrierverfahren nach einem der Ansprüche 9 bis 15, **dadurch gekennzeichnet, dass** mehrere Schweißvorgänge durchgeführt werden, und/oder dass, insbesondere bei Überschreiten einer gemessenen Mindesttemperatur des Heizelementes oder der Heizelemente an oder in dem Heizbandträger (13) oder den Heizbandträgern (13, 14), mehrmals pro Sekunde, bevorzugt ca. fünf mal pro Sekunde, der elektrische Widerstand gemessen wird, und/oder dass bei Unterschreiten einer gemessenen Mindesttemperatur des Temperaturfühlers (11) und/oder des Heizelementes oder der Heizelemente an oder in dem Heizbandträger (13) oder den Heizbandträgern (13, 14) oder der Anpressbacke (14), beispielsweise 30°C, ca. alle 2 Sekunden der elektrische Widerstand gemessen wird.

17. Kalibrierverfahren nach einem der Ansprüche 9 bis 16, **dadurch gekennzeichnet, dass** die ermittelte Abweichung der gemessenen tatsächlichen Betriebstemperatur oder Schweißtemperatur (T) des Heizelementes oder der Heizelemente an oder in dem Heizbandträger oder den Heizbandträgern (13, 14) und/oder der Anpressbacke von der vorgegebenen Betriebstemperatur durch Änderung der Betriebsparameter kompensiert wird.

18. Kalibrierverfahren nach einem der Ansprüche 9 bis 17, **dadurch gekennzeichnet, dass** mindestens ein Gewichtträger (34) mit einem Anpressdrucksensor (26), bevorzugt durch eine Schraubverbindung, verbunden wird, und dass mindestens ein Referenzgewicht auf einer, insbesondere magnetischen oder magnetisierten, Gewichtauflagefläche (36) des Gewichtträgers (34) angeordnet wird, und dass die Summe der Gewichtskräfte des Referenzgewichtes und des Gewichtträgers (34) mit dem Anpressdrucksensor (26) und einer Anpressdruckmesselektronik gemessen wird, wobei die Anpressdruckmesselektronik bevorzugt innerhalb der Schweißvorrichtung (10) angeordnet ist.

19. Kalibrierverfahren nach Anspruch 18, **dadurch gekennzeichnet, dass** nacheinander mindestens zwei Referenzgewichte, bevorzugt ein 1kg Gewichtelement (41) und ein 5kg Gewichtelement (41), auf der Gewichtauflagefläche (36) des Gewichtträgers (34) angeordnet werden, und dass jeweils die Summe der Gewichtskräfte des Referenzgewichtes und des Gewichtträgers (34) oder der Gewichtträger (34) mit dem Anpressdrucksensor oder den Anpressdrucksensoren (26) und einer Anpressdruckmesselektronik gemessen wird, und dass die Anpressdruckmesselektronik eine, bevorzugt lineare, Gewichtsfunktion der gemessenen Gewichtskräfte in Abhängigkeit der tatsächlichen Gewichtskräfte der Referenzgewichte ermittelt.

20. Kalibrierverfahren nach Anspruch 19, **dadurch gekennzeichnet, dass** das mindestens eine Referenzgewicht von der Gewichtauflagefläche (36) des Gewichtträgers (34) entfernt wird, dass der mindestens eine Gewichtträger (34) von dem Anpessdrucksensor oder den Anpressdrucksensoren gelöst und entfernt wird, und dass nach einer Benutzereingabe der Nullwert der Gewichtskraft des unbelasteten Anpressdrucksensors (26) gemessen wird, und dass die Anpressdruckmesselektronik auf Grundlage der Steigung der Gewichtsfunktion und des Nullwertes die Anpressdruckmessung kalibriert.
